# EUROPEAN PATENT APPLICATION

(11) **EP 4 746 251 A1**
(43) Date of publication of application: **20.05.2026**
(21) Application number: 23946525.5
(22) Date of filing: 26.12.2023
(51) Int. Cl.: H02K 1/16

(54) **STATOR ASSEMBLY, AXIAL FLUX MOTOR, ELECTRIC DRIVE APPARATUS, SYSTEM, AND ELECTRIC DEVICE**

(30) Priority: 21.07.2023 CN 202310905758
(71) Applicant: Contemporary Amperex Intelligence Technology (Shanghai) Limited, Shanghai 201306 (CN)
(72) Inventor: HUANG, Liren, Shanghai 201306 (CN)
(74) Representative: Gong, Jinping
(86) International application number: PCT/CN2023/142082
(87) International publication number: WO 2025/020450

(57) **Abstract**

The present application provides a stator assembly (111), an axial flux motor (11), an electric drive apparatus (10) and system (100), and an electric device. The stator assembly (111) includes two iron cores (1111), air gap sides of the two iron cores (1111) are disposed opposite to each other or back to back, the air gap side of the iron core (1111) is provided with a plurality of winding slots (11113) disposed around a central axis of the stator assembly (111), a projection of the iron core (1111) along an axial direction of the stator assembly (111) is a first projection, and in the first projection, a length direction of the winding slot (11113) is relatively inclined with respect to a radial direction of the iron core (1111).

## Description

### CROSS-REFERENCE TO RELATED APPLICATIONS

The present application claims the priority of Chinese Patent Application No. 202310905758.9, filed on July 21, 2023 and entitled "STATOR ASSEMBLY, AXIAL FLUX MOTOR, ELECTRIC DRIVE APPARATUS AND SYSTEM, AND ELECTRIC DEVICE", which is incorporated herein by reference in its entirety.

### TECHNICAL FIELD

The present application belongs to the field of motor technology, and more specifically, relates to a stator assembly, an axial flux motor, an electric drive apparatus and system, and an electric device.

### BACKGROUND

An axial flux motor is a motor in which the magnetic flux direction is an axial direction. Due to the relatively small axial dimension of the axial flux motor, it is increasingly favored. The stator assembly of an axial flux motor usually includes two stators. In order to reduce eddy current losses in the axial flux motor, the two stators usually adopt different winding structures, which makes the assembly process of the axial flux motor very complicated. Thus, how to simplify the assembly process of the axial flux motor is a technical problem that needs to be solved urgently.

### SUMMARY

The purpose of the embodiments of the present application is to provide a stator assembly, an axial flux motor, an electric drive apparatus and system, and an electric device, so as to solve the technical problem of complicated assembly process of the axial flux motor in the related art.

To achieve the above purpose, the technical solution adopted by the embodiments of the present application is: to provide a stator assembly applied to an axial flux motor, where the stator assembly includes two iron cores, air gap sides of the two iron cores are disposed opposite to each other or back to back, the air gap side of the iron core is provided with a plurality of winding slots disposed around a central axis of the stator assembly, a projection of the iron core along an axial direction of the stator assembly is a first projection, and in the first projection, a length direction of the winding slot is relatively inclined with respect to a radial direction of the iron core.

The stator assembly provided by the embodiments of the present application has at least the following beneficial effects: in the stator assembly provided by the embodiments of the present application, the two iron cores are disposed opposite to each other or back to back, the air gap side of the iron core is provided with a plurality of winding slots, and in the projection of the iron core along the axial direction of the stator assembly, the length direction of the winding slot is relatively inclined with respect to the radial direction of the iron core, so that the winding slots of the two iron cores have the same inclination amplitude but opposite inclination directions. In this way, magnetic flux can be alternately transmitted between the two iron cores, so that the portion of the magnetic circuit of the axial flux motor located between the two iron cores extends in a zigzag structure, which effectively increases the length of the magnetic circuit of the axial flux motor, thereby effectively weakening the armature reaction of the axial flux motor, and further effectively suppressing eddy current losses of the axial flux motor. Compared with two sets of windings adopting different winding structures, the two sets of windings of the stator assembly provided by the embodiments of the present application can adopt the same winding structure, thereby effectively simplifying the manufacturing and assembly process of the axial flux motor.

In some embodiments of the present application, a projection of the stator assembly along the axial direction of the stator assembly is a second projection, and in the second projection, the plurality of winding slots of one iron core intersect with the plurality of winding slots of the other iron core in a one-to-one correspondence.

By adopting the above technical solution, the length of the magnetic circuit of the stator assembly is further increased, which can make the magnetic field more uniformly distributed between the two iron cores, effectively reducing the magnetic field gradient of the axial flux motor, thereby further weakening the armature reaction of the axial flux motor, and further suppressing eddy current losses of the axial flux motor.

In some embodiments of the present application, the number of the winding slots of the iron core is N, one end of the winding slot penetrates an inner peripheral wall of the iron core to form a first open end, the other end of the winding slot penetrates an outer peripheral wall of the iron core to form a second open end, and in the first projection, a circle center of the iron core is connected with a midpoint of the first open end to form a first radial line, the circle center of the iron core is connected with a midpoint of the second open end to form a second radial line, and an angle of an included angle formed by the first radial line and the second radial line is θ, where 180°/N ≤ θ ≤ 360°/N.

By adopting the above technical solution, the inclination angle of the winding slot can be limited within a reasonable range, so that not only torque loss of the axial flux motor can be reduced, but also torque ripple of the axial flux motor can be effectively suppressed, thereby effectively improving the stability of the axial flux motor.

In some embodiments of the present application, in the first projection, each angle θ is the same, and the two iron cores have the same angle θ.

By adopting the above technical solution, the working stability of the axial flux motor is effectively improved.

In some embodiments of the present application, the stator assembly further includes an injection molded part, the iron core includes a plurality of tooth portions, the plurality of tooth portions are spaced apart along a circumferential direction of the stator assembly to form a plurality of winding slots, and the plurality of tooth portions are connected by the injection molded part.

By adopting the above technical solution, there is no need to additionally provide a yoke portion on the iron core, which can reduce the magnetic reluctance of the stator assembly, thereby effectively alleviating the magnetic saturation phenomenon of the stator assembly.

In some embodiments of the present application, the plurality of tooth portions of the two iron cores are connected into one body by the injection molded part.

By adopting the above technical solution, the injection molded part can be directly formed by an injection molding process and the plurality of tooth portions of the two iron cores can be connected together, thereby effectively simplifying the assembly process of the stator assembly and further simplifying the assembly process of the axial flux motor.

In some embodiments of the present application, when the air gap sides of the two iron cores are disposed back to back, the tooth portions of the two iron cores are attached along the axial direction of the stator assembly.

By adopting the above technical solution, the axial dimension of the stator assembly is effectively reduced, thereby effectively reducing the volume of the axial flux motor.

In some embodiments of the present application, the iron core includes a yoke portion and a plurality of tooth portions provided on the yoke portion, the plurality of tooth portions are spaced apart along a circumferential direction of the stator assembly to form a plurality of winding slots, and when the air gap sides of the two iron cores are disposed back to back, the yoke portions of the two iron cores form an integral member.

By adopting the above technical solution, the tooth portions of the two iron cores can share one yoke portion, thereby effectively simplifying the assembly process of the stator assembly and further simplifying the assembly process of the axial flux motor.

In some embodiments of the present application, the stator assembly further includes two sets of windings, the windings include winding wires wound in the winding slots, and the winding wires are flat wires.

By adopting the above technical solution, the filling factor of the winding in the winding slot is effectively improved, thereby effectively improving the working efficiency of the axial flux motor.

In some embodiments of the present application, the stator assembly further includes two sets of windings, the windings are wound in the winding slots, and the windings are distributed windings.

By adopting the above technical solution, the asymmetry of the magnetic field waveform of the axial flux motor can be effectively reduced, thereby effectively reducing winding harmonics and further suppressing eddy current losses of the axial flux motor.

In some embodiments of the present application, the air gap side of the iron core is provided with a plurality of wire inlet ports, the plurality of wire inlet ports are in communication with the plurality of winding slots in a one-to-one correspondence, and a width of the wire inlet port is less than a width of the winding slot.

By adopting the above technical solution, the windings can be effectively restricted in the winding slots, thereby effectively reducing the risk of the windings detaching from the winding slots and improving the reliability of the axial flux motor.

In some embodiments of the present application, the stator assembly further includes a stator housing for accommodating a cooling medium, and the iron core is accommodated in the stator housing.

By adopting the above technical solution, the heat generated by the stator assembly during operation can be directly transferred to the cooling medium, thereby effectively improving the cooling efficiency of the stator assembly and effectively improving the reliability of the axial flux motor.

The embodiments of the present application further provide an axial flux motor, including the stator assembly according to any one of the above embodiments.

The axial flux motor provided by the embodiments of the present application has at least the following beneficial effects: since the axial flux motor provided by the embodiments of the present application adopts the stator assembly according to any one of the above embodiments, the assembly process of the axial flux motor is effectively simplified.

In some embodiments of the present application, the axial flux motor further includes a rotor, and when the air gap sides of the two iron cores are disposed opposite to each other, the rotor is disposed between the two iron cores and coaxially with the two iron cores.

By adopting the above technical solution, the assembly process of a single-rotor axial flux motor is effectively simplified.

In some embodiments of the present application, the axial flux motor further includes two rotors, and when the air gap sides of the two iron cores are disposed back to back, one rotor is disposed opposite to the air gap side of one iron core, and the other rotor is disposed opposite to the air gap side of the other iron core.

By adopting the above technical solution, the assembly process of a double-rotor axial flux motor is effectively simplified.

The embodiments of the present application further provide an electric drive apparatus, including the axial flux motor according to any one of the above embodiments.

The electric drive apparatus provided by the embodiments of the present application has at least the following beneficial effects: since the electric drive apparatus provided by the embodiments of the present application adopts the axial flux motor according to any one of the above embodiments, the assembly process of the electric drive apparatus is effectively simplified.

The embodiments of the present application further provide an electric drive system, including a battery and the electric drive apparatus described above, where the battery is electrically connected to the electric drive apparatus.

The electric drive system provided by the embodiments of the present application has at least the following beneficial effects: since the electric drive system provided by the embodiments of the present application adopts the electric drive apparatus according to any one of the above embodiments, the assembly process of the electric drive system is effectively simplified.

The embodiments of the present application further provide an electric device, including the electric drive system described above.

The electric device provided by the embodiments of the present application has at least the following beneficial effects: since the electric device provided by the embodiments of the present application adopts the electric drive system according to any one of the above embodiments, the assembly process of the electric device is effectively simplified.

### BRIEF DESCRIPTION OF DRAWINGS

In order to more clearly illustrate the technical solutions in the embodiments of the present application, the drawings to be used in the descriptions of embodiments or the related art will be briefly described below. Obviously, the drawings in the following description are only some embodiments of the present application, and for those of ordinary skill in the art, other drawings can be obtained based on these drawings without creative efforts.
FIG. 1 is a schematic structural diagram of a vehicle according to an embodiment of the present application;
FIG. 2 is an exploded structural schematic diagram of a battery according to an embodiment of the present application;
FIG. 3 is a schematic structural diagram of an electric drive apparatus according to an embodiment of the present application;
FIG. 4 is a schematic structural diagram of an axial flux motor according to an embodiment of the present application;
FIG. 5 is a schematic structural diagram of an axial flux motor according to another embodiment of the present application;
FIG. 6 is a schematic structural diagram of an axial flux motor according to still another embodiment of the present application;
FIG. 7 is a schematic structural diagram of a first projection of an iron core according to an embodiment of the present application;
FIG. 8 is a schematic structural diagram of a second projection of a stator assembly according to an embodiment of the present application;
FIG. 9 is a schematic diagram of an assembly structure of an iron core and windings in a stator assembly according to an embodiment of the present application; and
FIG. 10 is a cross-sectional structural schematic diagram of winding wires of the windings shown in FIG. 9 and placed in winding slots of the iron core.

### Reference signs in drawings:

1000. vehicle;
100. electric drive system;
10. electric drive apparatus;
11. axial flux motor; 111. stator assembly; 1111. iron core; 11111. tooth portion; 11112. yoke portion; 11113. winding slot; 11114. first open end; 11115. second open end; 11116. first radial line; 11117. second radial line; 11118. wire inlet port; 1112. injection molded part; 1113. stator housing; 1114. winding; 11141. winding wire; 112. rotor; 113. outer housing; 114. magnetic circuit; 12. controller; 13. speed shifting mechanism;
20. battery;
21. box; 211. first portion; 212. second portion; and
22. battery cell.

### DESCRIPTION OF EMBODIMENTS

In order to make the technical problems to be solved, technical solutions, and beneficial effects of the present application clearer, the present application will be further described in detail below with reference to the drawings and embodiments. It should be understood that the specific embodiments described herein are only used to explain the present application and are not intended to limit the present application.

It should be noted that when an element is referred to as being "fixed to" or "disposed on" another element, it can be directly on the another element or indirectly on the another element. When an element is referred to as being "connected to" another element, it can be directly connected to the another element or indirectly connected to the another element.

It should be understood that the orientation or positional relationships indicated by terms such as "length", "width", "upper", "lower", "front", "rear", "left", "right", "vertical", "horizontal", "top", "bottom", "inner", or "outer" are based on the orientation or positional relationships shown in the drawings, and are only for the convenience of describing the present application and simplifying the description, rather than indicating or implying that the referred means or element must have a specific orientation, be constructed and operated in a specific orientation, and therefore cannot be understood as a limitation of the present application.

In addition, the terms "first" and "second" are only used for descriptive purposes and cannot be understood as indicating or implying relative importance or implicitly indicating the number of indicated technical features. Thus, the features defined with "first" and "second" may explicitly or implicitly include one or more of the features. In the description of the present application, "a plurality of" means two or more, unless otherwise explicitly and specifically defined.

A motor is a power apparatus of an electric device, and the motor is used to convert electrical energy into mechanical energy to drive the electric device to operate. An axial flux motor refers to a motor in which the magnetic flux direction is an axial direction and the current-carrying conductors are placed in a radial direction. The stator assembly of an axial flux motor usually includes two iron cores and two sets of windings, the air gap side of the iron core is provided with a plurality of winding slots, one set of windings is wound in the winding slots of one iron core, and the other set of windings is wound in the winding slots of the other iron core.

In the related art, the length direction of the winding slot of the iron core is parallel to the radial direction of the iron core, and the winding slots of the two iron cores are disposed opposite one by one or back to back one by one. If the two sets of windings adopt the same winding structure, the portion of the magnetic circuit of the axial flux motor located between the two iron cores generally extends in a straight line structure, which shortens the magnetic circuit of the axial flux motor, thereby enhancing the armature reaction of the axial flux motor, causing increased eddy current losses of the axial flux motor. In order to suppress eddy current losses of the axial flux motor, manufacturers usually adopt different winding structures for the two sets of windings, but this makes the assembly process of the axial flux motor complicated, thereby greatly increasing the assembly difficulty of the axial flux motor and reducing the assembly efficiency of the axial flux motor.

In order to suppress eddy current losses of the axial flux motor and simplify the assembly process of the axial flux motor, in the stator assembly provided by the embodiments of the present application, two iron cores are disposed opposite to each other or back to back, the air gap side of the iron core is provided with a plurality of winding slots, and in the projection of the iron core along the axial direction of the stator assembly, the length direction of the winding slot is relatively inclined with respect to the radial direction of the iron core, so that the winding slots of the two iron cores have the same inclination amplitude but opposite inclination directions. In this way, magnetic flux can be alternately transmitted between the two iron cores, so that the portion of the magnetic circuit of the axial flux motor located between the two iron cores extends in a zigzag structure, which effectively increases the length of the magnetic circuit of the axial flux motor, thereby effectively weakening the armature reaction of the axial flux motor, and further effectively suppressing eddy current losses of the axial flux motor. Compared with two sets of windings adopting different winding structures, the two sets of windings of the stator assembly provided by the embodiments of the present application can adopt the same winding structure, thereby effectively simplifying the assembly process of the axial flux motor.

The axial flux motor provided by the embodiments of the present application can be applied to electric devices, and the electric device can be, but is not limited to, a vehicle, a portable device, a ship, a spacecraft, an electric toy, and an electric tool. The vehicle can be a fuel vehicle, a gas vehicle, or a new energy vehicle, and the new energy vehicle can be a pure electric vehicle, a hybrid vehicle, an extended-range vehicle, or the like. The spacecraft includes airplanes, rockets, space shuttles, spaceships, and the like. Electric toys include fixed or mobile electric toys, such as game consoles, electric car toys, electric ship toys, and electric airplane toys. Electric tools include metal cutting electric tools, grinding electric tools, assembly electric tools, and railway electric tools, such as electric drills, electric grinders, electric wrenches, electric screwdrivers, electric hammers, impact drills, concrete vibrators, and planers.

The following embodiments are described by taking the electric device of one embodiment of the present application as a vehicle as an example for convenience of description.

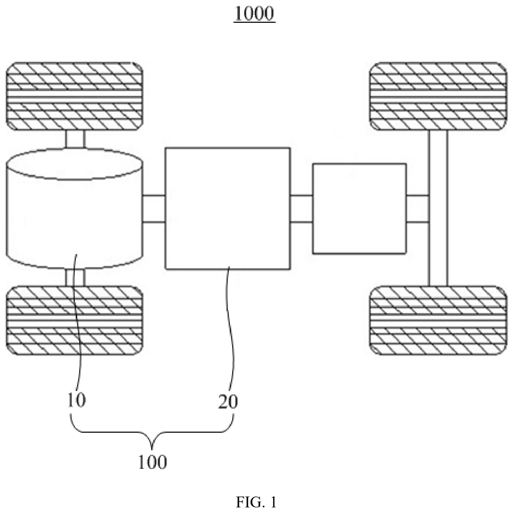

Referring to FIG. 1, FIG. 1 is a schematic structural diagram of a vehicle 1000 according to an embodiment of the present application. The vehicle 1000 can be a front-drive vehicle, a rear-drive vehicle, or a four-drive vehicle. The vehicle 1000 includes a vehicle body and an electric drive system 100.

The vehicle body is the main supporting component of the vehicle 1000, and the vehicle body has an engine compartment and a passenger compartment, where the engine compartment is used to accommodate the power mechanism, electronic control mechanism, transmission mechanism, or the like of the vehicle 1000, and the passenger compartment is used to provide operating space and riding space for occupants. When the vehicle 1000 is a front-drive vehicle, the engine compartment is provided at the head of the vehicle body, that is, the engine compartment is a front engine compartment; when the vehicle 1000 is a rear-drive vehicle, the engine compartment is provided at the tail of the vehicle body, that is, the engine compartment is a rear engine compartment; and when the vehicle 1000 is a four-drive vehicle, the engine compartment is divided into a front engine compartment and a rear engine compartment, the front engine compartment is provided at the head of the vehicle body, and the rear engine compartment is provided at the tail of the vehicle body. The passenger compartment is provided between the head and the tail of the vehicle body.

The electric drive system 100 is the power system of the vehicle 1000, and the electric drive system 100 is used to convert electrical energy into mechanical energy and output the mechanical energy to the wheels of the vehicle 1000 to drive the vehicle 1000 to travel. The electric drive system 100 is provided on the vehicle body. Specifically, a part of the electric drive system 100 can be provided in the engine compartment, and another part of the electric drive system 100 can be provided at the bottom of the vehicle body.

Referring to FIG. 1, the electric drive system 100 provided by the embodiment of the present application includes an electric drive apparatus 10 and a battery 20.

The electric drive apparatus 10 is used to convert the electrical energy provided by the battery 20 into mechanical energy and output the mechanical energy to the wheels of the vehicle 1000 to drive the vehicle 1000 to travel, and in the case of kinetic energy recovery, the electric drive apparatus 10 acts as a generator to convert mechanical energy into electrical energy and deliver the generated electrical energy to the battery 20 for storage. The electric drive apparatus 10 is installed in the engine compartment. Specifically, when the vehicle 1000 is a front-drive vehicle, the electric drive apparatus 10 is disposed at the front of the vehicle 1000 and is used to output the above mechanical energy to the front wheels of the vehicle 1000 to drive the vehicle 1000 to travel; when the vehicle 1000 is a rear-drive vehicle, the electric drive apparatus 10 is disposed at the rear of the vehicle 1000 and is used to output the above mechanical energy to the rear wheels of the vehicle 1000 to drive the vehicle 1000 to travel; and when the vehicle 1000 is a four-drive vehicle, there can be two electric drive apparatuses 10, one electric drive apparatus 10 is disposed at the front of the vehicle 1000 and is used to output the above mechanical energy to the front wheels of the vehicle 1000, and the other electric drive apparatus 10 is disposed at the rear of the vehicle 1000 and is used to output the above mechanical energy to the rear wheels of the vehicle 1000 to drive the vehicle 1000 to travel.

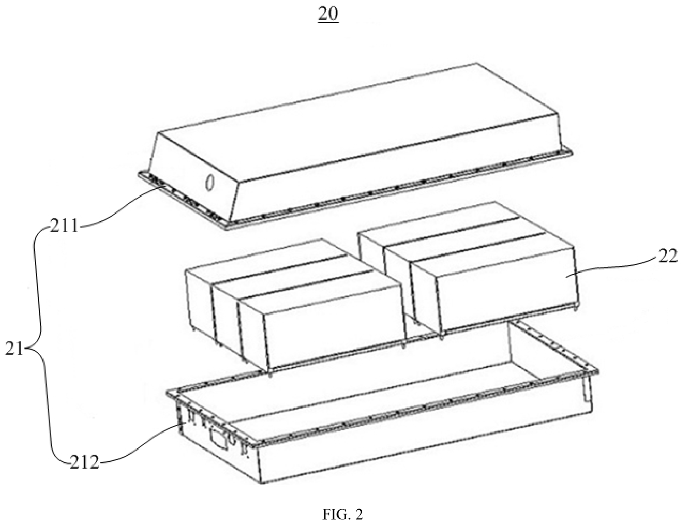

The battery 20 is used to provide electrical energy for the electric drive apparatus 10, and the battery 20 can be provided at the bottom, head, or tail of the vehicle 1000. Referring to FIG. 2, FIG. 2 is an exploded schematic diagram of the battery 20 according to an embodiment of the present application. The battery 20 includes a box 21 and battery cells 22, and the battery cells 22 are accommodated in the box 21. The box 21 is used to provide an accommodating space for the battery cells 22, and the box 21 can adopt various structures. In some embodiments, the box 21 can include a first portion 211 and a second portion 212, the first portion 211 and the second portion 212 cover each other, and the first portion 211 and the second portion 212 jointly define an accommodating space for accommodating the battery cells 22. The second portion 212 can be a hollow structure with one end open, the first portion 211 can be a plate-like structure, and the first portion 211 covers the open side of the second portion 212, so that the first portion 211 and the second portion 212 jointly define the accommodating space; the first portion 211 and the second portion 212 can also both be hollow structures with one side open, and the open side of the first portion 211 covers the open side of the second portion 212. Certainly, the box 21 formed by the first portion 211 and the second portion 212 can have various shapes, such as a cylinder or a rectangular parallelepiped.

In some embodiments, the box 21 can be a part of the chassis structure of the vehicle 1000. For example, a part of the box 21 can become at least a part of the floor of the vehicle 1000, or a part of the box 21 can become at least a part of the crossbeam and longitudinal beam of the vehicle 1000.

Certainly, in some embodiments, the battery 20 may not include the box 21, but multiple battery cells 22 are electrically connected and assembled into a whole through necessary fixing structures and then installed in the vehicle 1000.

In the battery 20, there can be multiple battery cells 22, and the multiple battery cells 22 can be connected in series or in parallel or in a mixed connection, and the mixed connection means that the multiple battery cells 22 have both series and parallel connections. The multiple battery cells 22 can be directly connected in series or in parallel or in a mixed connection, and then the whole composed of the multiple battery cells 22 is accommodated in the box 21. Certainly, the battery 20 can also be formed in a manner that multiple battery cells 22 are first connected in series or in parallel or in a mixed connection to form battery modules, and then multiple battery modules are connected in series or in parallel or in a mixed connection to form a whole and accommodated in the box 21. The battery 20 can also include other functional components, for example, the battery 20 can also include bus components for realizing electrical connections between the multiple battery cells 22.

Each battery cell 22 can be a secondary battery or a primary battery, where the secondary battery refers to a battery cell 22 that can continue to be used by activating the active material through charging after the battery cell 22 is discharged, and the primary battery refers to a battery cell 22 that cannot continue to be used by activating the active material through charging after the electrical energy of the battery cell 22 is exhausted. The battery cell 22 can also be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead-acid battery, or the like, but is not limited thereto. The battery cell 22 can be a cylindrical battery cell, a prismatic battery cell, a pouch battery cell, or a battery cell 22 of other shapes, and the prismatic battery cell includes a square-shell battery cell, a blade-shaped battery cell, or a polygonal prismatic battery cell, for example, the polygonal prismatic battery cell is a hexagonal prismatic battery cell, which is not particularly limited in the present application.

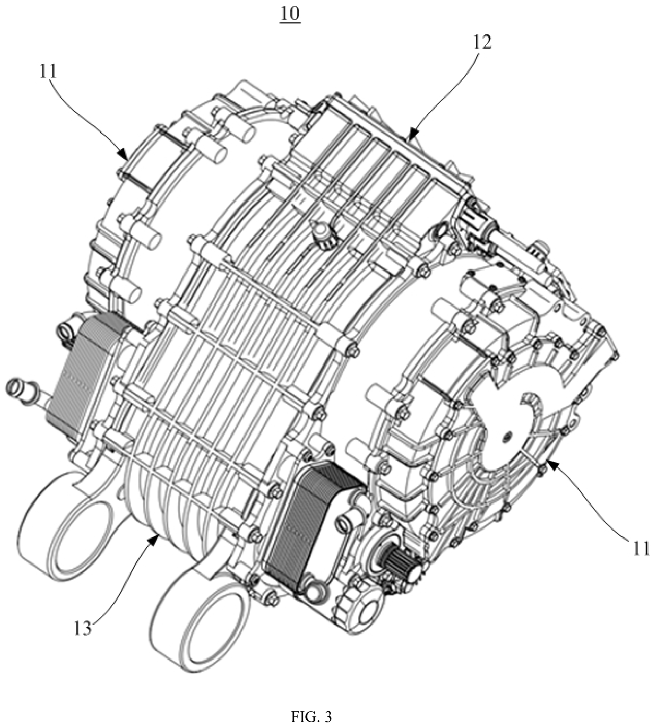

Referring to FIG. 3, the electric drive apparatus 10 includes an axial flux motor 11, and the axial flux motor 11 is the main power output component of the electric drive apparatus 10, and is used to convert the electrical energy provided by the battery 20 into mechanical energy. The number of the axial flux motors 11 can be one or more. In some embodiments, the number of the axial flux motors 11 is two, and the two axial flux motors 11 are coaxially disposed, that is, the central axes of the two axial flux motors 11 coincide. The electric drive apparatus 10 can also include a speed shifting mechanism 13, the speed shifting mechanism 13 is the power transmission mechanism of the electric drive apparatus 10, the speed shifting mechanism 13 has a power input end and a power output end, the power input end of the speed shifting mechanism 13 is connected to the rotating shaft of the axial flux motor 11, the power output end of the speed shifting mechanism 13 is connected to the wheels of the vehicle 1000, and the speed shifting mechanism 13 transmits the above mechanical energy to the wheels of the vehicle 1000 in a manner of changing the rotation speed and torque input by the axial flux motor 11. For example, the speed shifting mechanism 13 transmits the above mechanical energy to the wheels of the vehicle 1000 in a manner of reducing the output rotation speed and increasing the torque relative to the input of the axial flux motor 11, or for example, the speed shifting mechanism 13 transmits the above mechanical energy to the wheels of the vehicle 1000 in a manner of increasing the output rotation speed and reducing the torque relative to the input of the axial flux motor 11. Certainly, in other embodiments, the speed shifting mechanism 13 can also be used to change the direction of the output shaft of the electric drive apparatus 10 relative to the output shaft of the axial flux motor 11, for example, using bevel gears or worm gear structures to connect the output shaft of the axial flux motor 11 and further change the direction of torque output. Optionally, the speed shifting mechanism 13 can be, but is not limited to, a gear shaft speed shifting mechanism, a worm speed shifting mechanism, a planetary gear speed shifting mechanism, and a continuously variable speed shifting mechanism, and is not specifically limited herein. The electric drive apparatus 10 can also include a controller 12, and the controller 12 is used to convert the direct current output by the battery 20 into alternating current and deliver the alternating current to the axial flux motor 11, and is used to control the operation of the axial flux motor 11, for example, the start/stop, rotation speed, torque of the axial flux motor 11. Certainly, in other embodiments, the controller 12 can also be used to rectify the alternating current generated by the rotation of the axial flux motor 11 into direct current and deliver it to the battery 20, so as to realize the kinetic energy recovery function of the vehicle 1000.

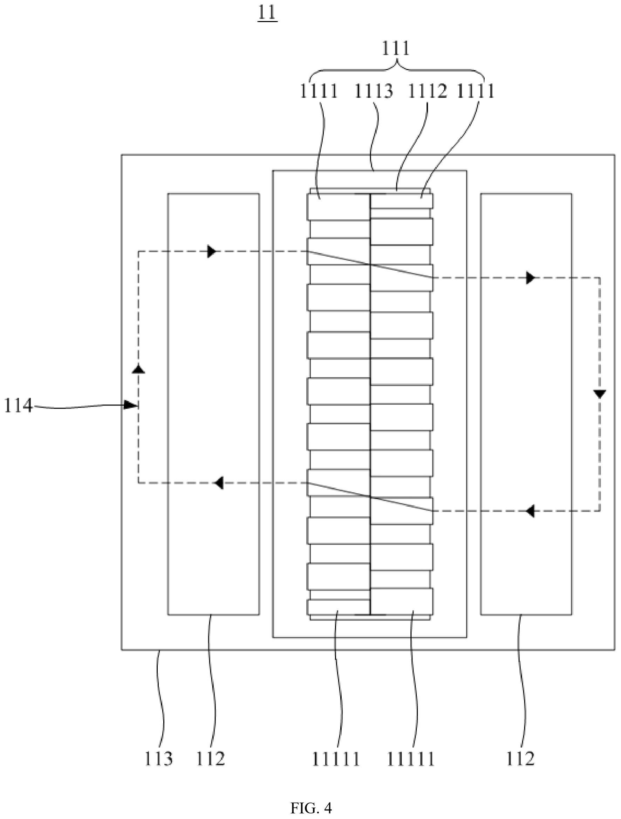

Referring to FIGs. 4 to 6, the axial flux motor 11 includes a stator assembly 111 and a rotor 112, the rotor 112 is the rotating part of the axial flux motor 11, and the stator assembly 111 is the fixed part of the axial flux motor 11. The axial flux motor 11 can also include an outer housing 113, the outer housing 113 is used to provide an installation environment for the stator assembly 111 and the rotor 112, and also serves as a supporting component of the axial flux motor 11. Optionally, the outer housing 113 can be an integrally formed member or an assembled member assembled from multiple parts. The material of the outer housing 113 can be, but is not limited to, copper, iron, aluminum, stainless steel, aluminum alloy, and plastic, and is not specifically limited herein.

The stator assembly 111 provided by the embodiments of the present application will be described below with reference to the drawings.

In a first aspect, referring to FIGs. 4 to 7, an embodiment of the present application provides a stator assembly 111, including two iron cores 1111, air gap sides of the two iron cores 1111 are disposed opposite to each other or back to back, the air gap side of the iron core 1111 is provided with a plurality of winding slots 11113 disposed around a central axis of the stator assembly 111, a projection of the iron core 1111 along an axial direction of the stator assembly 111 is a first projection, and in the first projection, a length direction of the winding slot 11113 is relatively inclined with respect to a radial direction of the iron core 1111.

The iron core 1111 is an important part of the magnetic circuit 114 of the axial flux motor 11, and the iron core 1111, the rotor 112, and the air gap between the iron core 1111 and the rotor 112 jointly constitute the magnetic circuit 114 of the axial flux motor 11. In some embodiments, the iron core 1111 can be an assembled member assembled from multiple components, for example, the iron core 1111 is formed by stacking multiple punched sheets. In some other embodiments, the iron core 1111 can also be an integrally formed member, for example, the iron core 1111 is integrally formed by a casting process.

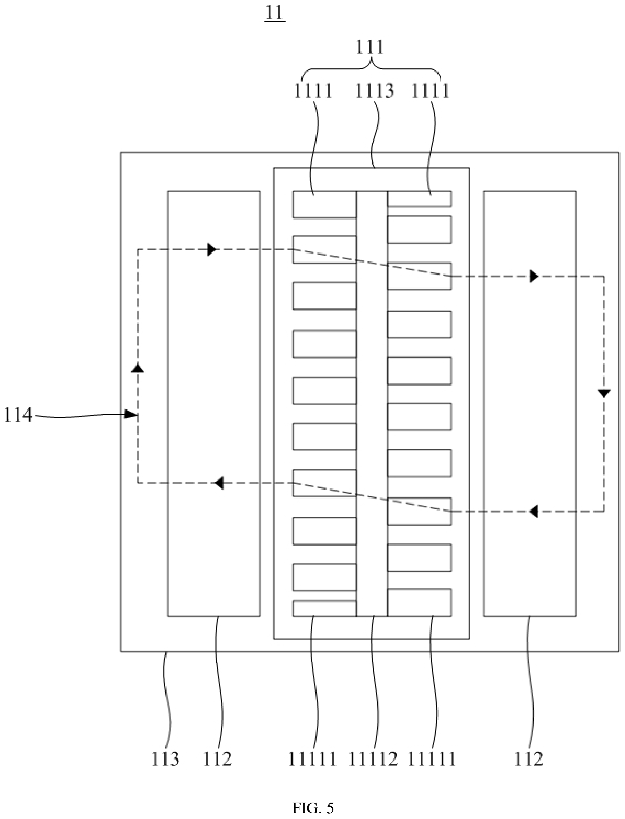

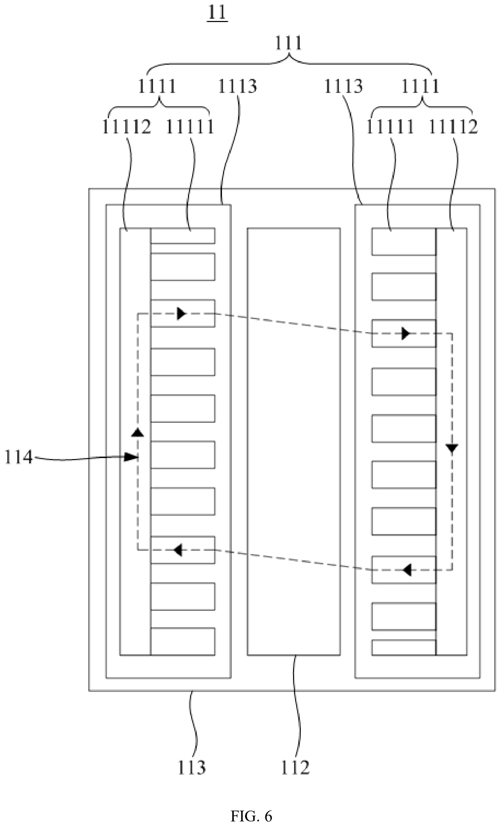

The air gap side of the iron core 1111 refers to the side of the iron core 1111 facing the rotor 112 and spaced from the rotor 112, and the air gap side of the iron core 1111 and the rotor 112 are spaced to form an air gap. The air gap sides of the two iron cores 1111 can be disposed opposite to each other or back to back. In some embodiments, referring to FIGs. 4 and 5, the air gap sides of the two iron cores 1111 are disposed back to back. In this embodiment, the number of the rotors 112 of the axial flux motor 11 is two, the air gap side of one iron core 1111 is disposed opposite to one rotor 112, and the air gap side of the other iron core 1111 is disposed opposite to the other rotor 112, meaning that the above stator assembly 111 is disposed between the two rotors 112. In another embodiment, referring to FIG. 6, the air gap sides of the two iron cores 1111 are disposed opposite and spaced apart. In this embodiment, the number of the rotors 112 of the axial flux motor 11 is one, the air gap side of one iron core 1111 is disposed opposite to one axial side of the rotor 112, and the air gap side of the other iron core 1111 is disposed opposite to the other axial side of the rotor 112, meaning that the rotor 112 is disposed between the two iron cores 1111.

The winding slot 11113 is a part for providing an accommodating space for the winding 1114. In some embodiments, the iron core 1111 includes a plurality of tooth portions 11111, and the plurality of tooth portions 11111 are circumferentially spaced apart around the central axis of the stator assembly 111 to form a plurality of winding slots 11113. It can be understood that one end of the winding slot 11113 penetrates the inner peripheral wall of the iron core 1111 to form a first open end 11114, and the other end of the winding slot 11113 penetrates the outer peripheral wall of the iron core 1111 to form a second open end 11115. The number of the winding slots 11113 can be determined according to actual application needs, for example, the number of the winding slots 11113 can be 18, 24, 36, or the like, and is not specifically limited herein.

The stator assembly 111 further includes two sets of windings 1114, one set of windings 1114 is wound in the winding slots 11113 of one iron core 1111, and the other set of windings 1114 is wound in the winding slots 11113 of the other iron core 1111. When the windings 1114 are energized, the stator assembly 111 generates an electromagnetic field, and the electromagnetic field is magnetically coupled with the rotor 112 to drive the rotor 112 to rotate. The windings 1114 can be, but are not limited to, integer slot windings, fractional slot windings, concentrated windings, and distributed windings, where integer slot windings refer to windings 1114 in which the number of winding slots 11113 occupied per pole per phase is an integer; fractional slot windings refer to windings 1114 in which the number of winding slots 11113 occupied per pole per phase is a fraction; concentrated windings refer to windings in which all coils of one winding 1114 are concentrated on the same tooth portion 11111 of the iron core 1111, and the two ends of the coils are connected to the same position through wires to form a common connection point, such windings 1114 are called concentrated windings; and distributed windings refer to windings in which each coil is distributed in a plurality of winding slots 11113, and adjacent coils are connected according to a certain phase difference, such windings 1114 are called distributed windings.

For convenience of description below, taking any plane perpendicular to the central axis of the stator assembly 111 as a reference plane, the winding slot 11113 can be inclined relative to the reference plane or parallel to the reference plane. The projection of the iron core 1111 on the reference plane is a first projection, and in the first projection, the length direction of the winding slot 11113 is relatively inclined with respect to the radial direction of the iron core 1111, where the length direction of the winding slot 11113 refers to the length direction of the figure formed by the winding slot 11113 in the first projection, specifically the direction from the first open end 11114 to the second open end 11115 or from the second open end 11115 to the first open end 11114. In the first projection, the angle of the included angle formed by the length direction of the winding slot 11113 and the radial direction of the iron core 1111 can be determined according to actual application needs, and is not specifically limited herein.

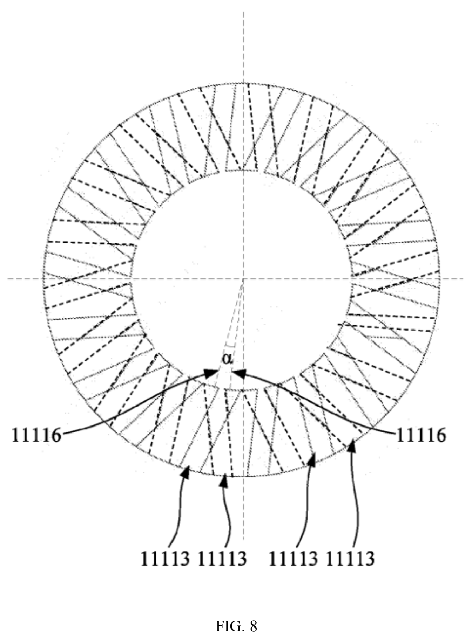

Referring to FIG. 8, the projection of the stator assembly 111 on the above reference plane is a second projection. Since the two iron cores 1111 are disposed opposite to each other or back to back, and in the first projection, the length direction of the winding slot 11113 is relatively inclined with respect to the radial direction of the iron core 1111 so that the winding slots 11113 of the two iron cores 1111 have the same inclination amplitude but opposite inclination directions, in the second projection, taking one winding slot 11113 of one iron core 1111 and one winding slot 11113 adjacent to or opposite to the aforementioned winding slot 11113 of the other iron core 1111 as a group, in the group of winding slots 11113, at least the extension lines of the two winding slots 11113 intersect.

In the stator assembly 111 provided by the embodiments of the present application, the two iron cores 1111 are disposed opposite to each other or back to back, the air gap side of the iron core 1111 is provided with a plurality of winding slots 11113, and in the projection of the iron core 1111 along the axial direction of the stator assembly 111, the length direction of the winding slot 11113 is relatively inclined with respect to the radial direction of the iron core 1111, so that the winding slots 11113 of the two iron cores 1111 have the same inclination amplitude but opposite inclination directions. In this way, magnetic flux can be alternately transmitted between the two iron cores 1111, as shown in FIGs. 4 to 7, so that the portion of the magnetic circuit 114 of the axial flux motor 11 located between the two iron cores 1111 extends in a zigzag structure, which effectively increases the length of the magnetic circuit 114 of the axial flux motor 11, thereby effectively weakening the armature reaction of the axial flux motor 11, and further effectively suppressing eddy current losses of the axial flux motor 11. Compared with two sets of windings 1114 adopting different winding structures, the two sets of windings 1114 of the stator assembly 111 provided by the embodiments of the present application can adopt the same winding structure, thereby effectively simplifying the manufacturing and assembly process of the axial flux motor 11.

In some embodiments of the present application, referring to FIG. 8, in the second projection, the plurality of winding slots 11113 of one iron core 1111 intersect with the plurality of winding slots 11113 of the other iron core 1111 in a one-to-one correspondence.

In other words, in the second projection, the plurality of winding slots 11113 of one iron core 1111 are disposed in one-to-one correspondence with the plurality of winding slots 11113 of the other iron core 1111, and taking one winding slot 11113 of one iron core 1111 and one winding slot 11113 of the other iron core 1111 opposite to the aforementioned winding slot 11113 as a group, in the group of winding slots 11113, the figures formed by the two winding slots 11113 in the second projection intersect.

In some embodiments, the figure formed by the first open end 11114 of the winding slot 11113 of one iron core 1111 in the second projection intersects with the figure formed by the first open end 11114 of the winding slot 11113 of the other iron core 1111 in the second projection, that is, in the second projection, the intersection point of the winding slots 11113 of the two iron cores 1111 can be located on the first open end 11114 of the winding slot 11113.

In some other embodiments, the figure formed by the second open end 11115 of the winding slot 11113 of one iron core 1111 in the second projection intersects with the figure formed by the second open end 11115 of the winding slot 11113 of the other iron core 1111 in the second projection, that is, in the second projection, the intersection point of the winding slots 11113 of the two iron cores 1111 is located on the second open end 11115 of the winding slot 11113.

In still some other embodiments, the figure formed by the middle part of the winding slot 11113 of one iron core 1111 in the second projection intersects with the figure formed by the middle part of the winding slot 11113 of the other iron core 1111 in the second projection, that is, in the second projection, the intersection point of the winding slots 11113 of the two iron cores 1111 is located on the middle part of the winding slot 11113.

By adopting the above technical solution, the length of the magnetic circuit 114 of the stator assembly 111 is further increased, which can make the magnetic field more uniformly distributed between the two iron cores 1111, effectively reducing the magnetic field gradient of the axial flux motor 11, thereby further weakening the armature reaction of the axial flux motor 11, and further suppressing eddy current losses of the axial flux motor 11.

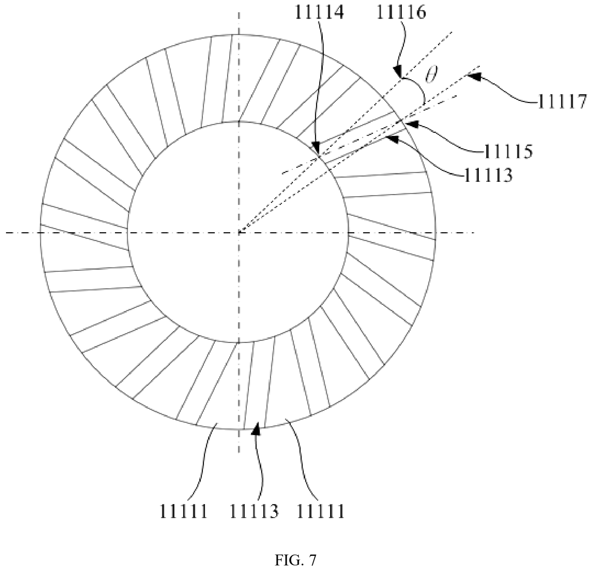

In some embodiments of the present application, referring to FIG. 7, the number of the winding slots 11113 of the iron core 1111 is N, and in the first projection, the circle center of the iron core 1111 is connected with the midpoint of the first open end 11114 of one winding slot 11113 to form a first radial line 11116, the circle center of the iron core 1111 is connected with the midpoint of the second open end 11115 of the winding slot 11113 to form a second radial line 11117, and an angle of an included angle formed by the first radial line 11116 and the second radial line 11117 is θ, where 180°/N ≤ θ ≤ 360°/N.

The midpoint of the first open end 11114 refers to the intersection point of the centerline of the figure formed by the winding slot 11113 in the first projection and the figure formed by the first open end 11114 in the first projection, and the first radial line 11116 passes through the circle center of the iron core 1111 and the midpoint of the first open end 11114. Similarly, the midpoint of the second open end 11115 refers to the intersection point of the centerline of the figure formed by the winding slot 11113 in the first projection and the figure formed by the second open end 11115 in the first projection, and the second radial line 11117 passes through the circle center of the iron core 1111 and the midpoint of the second open end 11115.

The angle of the included angle formed by the first radial line 11116 and the second radial line 11117 is θ, where 180°/N ≤ θ ≤ 360°/N. For example, if the number of the winding slots 11113 of the iron core 1111 is 18, N=18 and 10° ≤ θ ≤ 20°, such as θ=10°, θ=15°, or θ=20°. For another example, if the number of the winding slots 11113 of the iron core 1111 is 24, N=24 and 7.5° ≤ θ ≤ 15°, such as θ=7.5°, θ=10°, or θ=15°. For still another example, if the number of the winding slots 11113 of the iron core 1111 is 36, N=36 and 5° ≤ θ ≤ 10°, such as θ=5°, θ=7.5°, or θ=10°.

In the second projection, an angle of an included angle formed by the two first radial lines 11116 corresponding to the two intersecting winding slots 11113 is α. When the intersection point of the winding slots 11113 of the two iron cores 1111 is located on the first open end 11114 of the winding slot 11113, α=0. When the intersection point of the winding slots 11113 of the two iron cores 1111 is located on the second open end 11115 of the winding slot 11113, α=2θ. When the intersection point of the winding slots 11113 of the two iron cores 1111 is located on the middle part of the winding slot 11113, 0 ≤ α ≤ 2θ.

In the related art, the torque of the axial flux motor 11 is inversely proportional to the inclination angle of the winding slot 11113 of the iron core 1111 relative to the radial direction of the iron core 1111, and the torque ripple of the axial flux motor 11 is also inversely proportional to the inclination angle of the winding slot 11113 of the iron core 1111 relative to the radial direction of the iron core 1111, where a larger inclination angle of the winding slot 11113 of the iron core 1111 relative to the radial direction of the iron core 1111 indicates a smaller torque of the axial flux motor 11 and a smaller torque ripple of the axial flux motor 11. Conversely, a smaller inclination angle of the winding slot 11113 of the iron core 1111 relative to the radial direction of the iron core 1111 indicates a larger torque of the axial flux motor 11 and a larger torque ripple of the axial flux motor 11.

By adopting the above technical solution, the inclination angle of the winding slot 11113 can be limited within a reasonable range, so that not only torque loss of the axial flux motor 11 can be reduced, but also torque ripple of the axial flux motor 11 can be effectively suppressed, thereby effectively improving the stability of the axial flux motor 11.

In some embodiments of the present application, referring to FIG. 7, in the first projection, each angle θ is the same, and the two iron cores 1111 have the same angle θ.

In other words, for one iron core 1111, the inclination angles of the respective winding slots 11113 relative to the corresponding first radial line 11116 are equal, and for the two iron cores 1111, the inclination angles of the respective winding slots 11113 of one iron core 1111 relative to the corresponding first radial line 11116 are equal to the inclination angles of the respective winding slots 11113 of the other iron core 1111 relative to the corresponding first radial line 11116, that is, the winding slots 11113 of the two iron cores 1111 are the same.

By adopting the above technical solution, the working stability of the axial flux motor 11 is effectively improved.

In some embodiments of the present application, referring to FIG. 4, the stator assembly 111 further includes an injection molded part 1112, the iron core 1111 includes a plurality of tooth portions 11111, the plurality of tooth portions 11111 are spaced apart along a circumferential direction of the stator assembly 111 to form a plurality of winding slots 11113, and the plurality of tooth portions 11111 are connected by the injection molded part 1112.

The tooth portion 11111 is a protruding part of the iron core 1111, and in the circumferential direction of the iron core 1111, two adjacent tooth portions 11111 are spaced to form a winding slot 11113.

The injection molded part 1112 is a component made by an injection molding process. In some embodiments, during the production of the stator assembly 111, a plurality of tooth portions 11111 can be disposed in the circumferential direction, the plurality of tooth portions 11111 are fixed by a fixing tool, and then the above injection molded part 1112 is formed on the plurality of tooth portions 11111 by an injection molding process to connect the plurality of tooth portions 11111 into one body. In some other embodiments, during the production of the stator assembly 111, a plurality of tooth portions 11111 can be disposed in the circumferential direction, the plurality of tooth portions 11111 are fixed by a fixing tool, the windings 1114 are wound in the respective winding slots 11113, and then the above injection molded part 1112 is formed on the whole assembled from the iron core 1111 and the windings 1114 by an injection molding process to connect the iron core 1111 and the windings 1114 into one body.

By adopting the above technical solution, there is no need to additionally provide a yoke portion on the iron core 1111, which can reduce the magnetic reluctance of the stator assembly 111, thereby effectively alleviating the magnetic saturation phenomenon of the stator assembly 111.

In some embodiments of the present application, referring to FIG. 4, the plurality of tooth portions 11111 of the two iron cores 1111 are connected into one body by the injection molded part 1112.

In some embodiments, during the production of the stator assembly 111, the plurality of tooth portions 11111 of the two iron cores 1111 can be disposed in the circumferential direction, the plurality of tooth portions 11111 of the two iron cores 1111 are fixed by a fixing tool, and then the above injection molded part 1112 is formed on the plurality of tooth portions 11111 of the two iron cores 1111 by an injection molding process to connect the plurality of tooth portions 11111 of the two iron cores 1111 into one body. In some other embodiments, during production, the plurality of tooth portions 11111 of the two iron cores 1111 can be disposed in the circumferential direction, the plurality of tooth portions 11111 of the two iron cores 1111 are fixed by a fixing tool, two sets of windings 1114 are respectively wound in the respective winding slots 11113 of the corresponding iron cores 1111, and then the above injection molded part 1112 is formed on the whole assembled from the two iron cores 1111 and the two sets of windings 1114 by an injection molding process to connect the two iron cores 1111 and the two sets of windings 1114 into one body.

By adopting the above technical solution, the injection molded part 1112 can be directly formed by an injection molding process and the plurality of tooth portions 11111 of the two iron cores 1111 can be connected together, thereby effectively simplifying the assembly process of the stator assembly 111 and further simplifying the assembly process of the axial flux motor 11.

In some embodiments of the present application, referring to FIG. 4, when the air gap sides of the two iron cores 1111 are disposed back to back, the tooth portions 11111 of the two iron cores 1111 are attached along the axial direction of the stator assembly 111.

It can be understood that this embodiment is applicable to a double-rotor axial flux motor. In this embodiment, the axial side of the tooth portions 11111 of one iron core 1111 is attached to the axial side of the tooth portions 11111 of the other iron core 1111, that is, there is no gap between the tooth portions 11111 of the two iron cores 1111. Certainly, considering assembly tolerances, there can also be a slight gap between the tooth portions 11111 of the two iron cores 1111.

By adopting the above technical solution, the axial dimension of the stator assembly 111 is effectively reduced, thereby effectively reducing the volume of the axial flux motor 11.

In some embodiments of the present application, referring to FIG. 5, the iron core 1111 further includes a yoke portion 11112, a plurality of tooth portions 11111 are provided on the yoke portion 11112, and when the air gap sides of the two iron cores 1111 are disposed back to back, the yoke portions 11112 of the two iron cores 1111 are an integral member.

The yoke portion 11112 is a connecting part of the iron core 1111 for connecting a plurality of tooth portions 11111. The yoke portion 11112 is generally of a disc-like structure, and a plurality of tooth portions 11111 are provided on the yoke portion 11112 along the circumferential direction of the iron core 1111. As shown in FIG. 5, the yoke portions 11112 of the two iron cores 1111 being an integral member means that the yoke portions 11112 of the two iron cores 1111 form one body. In some embodiments, the yoke portions 11112 of the two iron cores 1111 can be formed into one body by stacking multiple sheets, a plurality of tooth portions 11111 of one iron core 1111 are provided on one axial side of the body, and a plurality of tooth portions 11111 of the other iron core 1111 are provided on the other axial side of the body. In some other embodiments, the yoke portions 11112 of the two iron cores 1111 can be made into one body by a casting process, a plurality of tooth portions 11111 of one iron core 1111 are provided on one axial side of the body, and a plurality of tooth portions 11111 of the other iron core 1111 are provided on the other axial side of the body, where the casting process can be, but is not limited to, a die-casting process and a casting process.

By adopting the above technical solution, the tooth portions 11111 of the two iron cores 1111 can share one yoke portion 11112, thereby effectively simplifying the assembly process of the stator assembly 111 and further simplifying the assembly process of the axial flux motor 11.

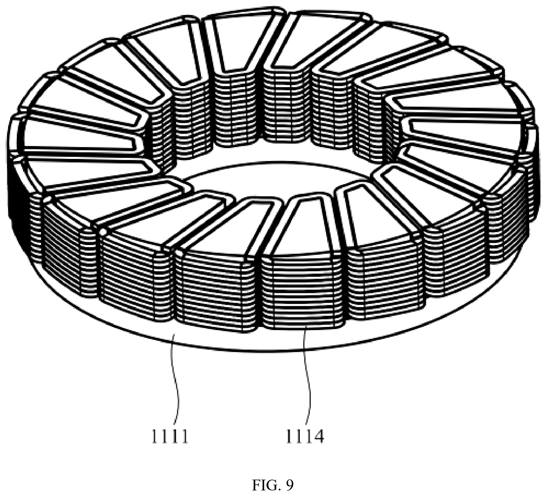

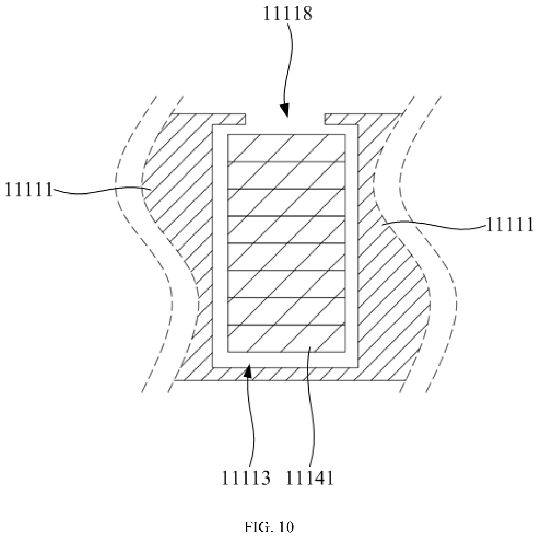

In some embodiments of the present application, referring to FIGs. 9 and 10, the winding 1114 includes a winding wire 11141 wound in the winding slot 11113, and the winding wire 11141 is a flat wire.

In this embodiment, the winding wire 11141 includes multiple segments, each segment is preformed into a flat structure, and the segments are placed in the winding slot 11113 and sequentially stacked along the depth direction of the winding slot 11113 until the winding slot 11113 is fully filled. It should be noted that the depth direction of the winding slot 11113 is parallel to the axial direction of the stator assembly 111.

By adopting the above technical solution, the filling factor of the winding 1114 in the winding slot 11113 is effectively improved, thereby effectively improving the working efficiency of the axial flux motor 11.

Certainly, in other embodiments, the winding wire 11141 can also be a round wire.

In some embodiments of the present application, the winding 1114 is a distributed winding.

By adopting the above technical solution, the asymmetry of the magnetic field waveform of the axial flux motor 11 can be effectively reduced, thereby effectively reducing winding harmonics and further suppressing eddy current losses of the axial flux motor 11.

In some embodiments of the present application, referring to FIG. 10, the air gap side of the iron core 1111 is provided with a plurality of wire inlet ports 11118, the plurality of wire inlet ports 11118 are in communication with the plurality of winding slots 11113 in a one-to-one correspondence, and a width of the wire inlet port 11118 is less than a width of the winding slot 11113.

The wire inlet port 11118 is used to provide space for the winding wire 11141 of the winding 1114 to enter the winding slot 11113. The wire inlet port 11118 penetrates the surface of the air gap side of the iron core 1111 to communicate with the winding slot 11113. It can be understood that each wire inlet port 11118 communicates with one winding slot 11113.

The width of the wire inlet port 11118 refers to the dimension of the wire inlet port 11118 along the circumferential direction of the iron core 1111, and similarly, the width of the winding slot 11113 refers to the dimension of the winding slot 11113 along the circumferential direction of the iron core 1111. During the production of the stator assembly 111, the winding wire 11141 of the winding 1114 is placed into the winding slot 11113 via the wire inlet port 11118, and after multiple winding operations on the winding wire 11141 of the winding 1114 to form a coil, after the coil fully fills the winding slot 11113, since the width of the wire inlet port 11118 is less than the width of the winding slot 11113, it is difficult for the coil to detach from the winding slot 11113 via the wire inlet port 11118.

By adopting the above technical solution, the winding 1114 can be effectively restricted in the winding slot 11113, thereby effectively reducing the risk of the winding 1114 detaching from the winding slot 11113 and improving the reliability of the axial flux motor 11.

In some embodiments of the present application, referring to FIGs. 4 to 6, the stator assembly 111 further includes a stator housing 1113 for accommodating a cooling medium, and the iron core 1111 is accommodated in the stator housing 1113.

The stator housing 1113 is used to provide an internal environment for the stator assembly 111. Optionally, the stator housing 1113 can be an integrally formed member or an assembled member assembled from multiple parts. The material of the stator housing 1113 can be, but is not limited to, copper, iron, aluminum, stainless steel, aluminum alloy, and plastic, and is not specifically limited herein. In some embodiments, when the stator housing 1113 includes multiple parts, some parts of the stator housing 1113 can be made of metal materials such as copper, iron, aluminum, stainless steel, or aluminum alloy, and other parts of the stator housing 1113 can be made of plastic, and is not specifically limited herein.

The cooling medium is a medium for absorbing the heat generated by the stator assembly 111. It can be understood that the iron core 1111 and the winding 1114 are accommodated in the stator housing 1113 and in contact with the cooling medium, so that the heat generated by the iron core 1111 and the heat generated by the winding 1114 are directly transferred to the cooling medium, thereby achieving the purpose of cooling the iron core 1111 and the winding 1114. In some embodiments, the cooling medium can be statically accommodated in the stator housing 1113. In some other embodiments, the stator housing 1113 is provided with a liquid inlet and a liquid outlet, and the cooling medium can enter the stator housing 1113 via the liquid inlet and leave the stator housing 1113 via the liquid outlet, so that the cooling medium can cool the stator assembly 111 in a circulating flow manner. Optionally, the cooling medium can be, but is not limited to, cooling oil and cooling water, and is not specifically limited herein.

In some embodiments, when the air gap sides of the two iron cores 1111 are disposed back to back, the number of the stator housings 1113 can be one, and the two iron cores 1111 are accommodated in the same stator housing 1113.

In some other embodiments, when the air gap sides of the two iron cores 1111 are disposed opposite to each other, the number of the stator housings 1113 can be two, one iron core 1111 is accommodated in one stator housing 1113, and the other iron core 1111 is accommodated in the other stator housing 1113.

By adopting the above technical solution, the heat generated by the stator assembly 111 during operation can be directly transferred to the cooling medium, thereby effectively improving the cooling efficiency of the stator assembly 111 and effectively improving the reliability of the axial flux motor 11.

In some embodiments of the present application, referring to FIGs. 4 and 7 to 10, the stator assembly 111 includes an injection molded part 1112, two iron cores 1111, and two sets of windings 1114. The air gap sides of the two iron cores 1111 are disposed opposite to each other or back to back, the iron core 1111 includes a plurality of tooth portions 11111, the plurality of tooth portions 11111 are circumferentially spaced apart around the central axis of the stator assembly 111 to form a plurality of winding slots 11113, one end of the winding slot 11113 penetrates the inner peripheral wall of the iron core 1111 to form a first open end 11114, and the other end of the winding slot 11113 penetrates the outer peripheral wall of the iron core 1111 to form a second open end 11115. The projection of the iron core 1111 along the axial direction of the stator assembly 111 is a first projection, and the projection of the stator assembly 111 along the axial direction of the stator assembly 111 is a second projection. In the first projection, the length direction of the winding slot 11113 is relatively inclined with respect to the radial direction of the iron core 1111, the circle center of the iron core 1111 is connected with the midpoint of the first open end 11114 to form a first radial line 11116, the circle center of the iron core 1111 is connected with the midpoint of the second open end 11115 to form a second radial line 11117, the angle of the included angle formed by the first radial line 11116 and the second radial line 11117 is θ, and the number of the winding slots 11113 of the iron core 1111 is N, where 180°/N ≤ θ ≤ 360°/N. In the second projection, the plurality of winding slots 11113 of one iron core 1111 intersect with the plurality of winding slots 11113 of the other iron core 1111 in a one-to-one correspondence; the intersection includes the projections of the two winding slots 11113 intersecting, or the extension lines of the two winding slots 11113 intersecting. One winding 1114 is wound in the plurality of winding slots 11113 of one iron core 1111, and the other winding 1114 is wound in the plurality of winding slots 11113 of the other iron core 1111. The winding 1114 is a distributed winding, the winding 1114 includes a winding wire 11141 wound in the winding slot 11113, and the winding wire 11141 is a flat wire. The plurality of tooth portions 11111 of the two iron cores 1111 are connected into one body by the injection molded part 1112, and when the air gap sides of the two iron cores 1111 are disposed back to back, the tooth portions 11111 of the two iron cores 1111 are attached along the axial direction of the stator assembly 111.

In a second aspect, referring to FIGs. 4 to 6, an embodiment of the present application provides an axial flux motor 11, including the stator assembly 111 according to any one of the above embodiments.

Since the axial flux motor 11 provided by the embodiment of the present application adopts the stator assembly 111 according to any one of the above embodiments, the assembly process of the axial flux motor 11 is effectively simplified.

In some embodiments of the present application, referring to FIG. 6, the axial flux motor 11 further includes a rotor 112, and when the air gap sides of the two iron cores 1111 are disposed opposite to each other, the rotor 112 is disposed between the two iron cores 1111 and coaxially with the two iron cores 1111.

In other words, in this embodiment, the axial flux motor 11 is a single-rotor axial flux motor.

By adopting the above technical solution, the assembly process of the single-rotor axial flux motor is effectively simplified.

In some embodiments of the present application, referring to FIGs. 4 and 5, the axial flux motor 11 further includes two rotors 112, and when the air gap sides of the two iron cores 1111 are disposed back to back, one rotor 112 is disposed opposite to the air gap side of one iron core 1111, and the other rotor 112 is disposed opposite to the air gap side of the other iron core 1111.

In other words, in this embodiment, the axial flux motor 11 is a double-rotor axial flux motor.

By adopting the above technical solution, the assembly process of the double-rotor axial flux motor is effectively simplified.

In a third aspect, referring to FIG. 3, an embodiment of the present application provides an electric drive apparatus 10, including the axial flux motor 11 according to any one of the above embodiments.

Since the electric drive apparatus 10 provided by the embodiment of the present application adopts the axial flux motor 11 according to any one of the above embodiments, the assembly process of the electric drive apparatus 10 is effectively simplified.

In a fourth aspect, referring to FIG. 1, an embodiment of the present application provides an electric drive system 100, including a battery 20 and the electric drive apparatus 10 described above, where the battery 20 is electrically connected to the electric drive apparatus 10.

Since the electric drive system 100 provided by the embodiment of the present application adopts the electric drive apparatus 10 according to any one of the above embodiments, the assembly process of the electric drive system 100 is effectively simplified.

In a fifth aspect, referring to FIG. 1, an embodiment of the present application provides an electric device, including the electric drive system 100 described above.

Since the electric device provided by the embodiment of the present application adopts the electric drive system 100 according to any one of the above embodiments, the assembly process of the electric device is effectively simplified.

The above are only preferred embodiments of the present application and are not intended to limit the present application. Any modifications, equivalent replacements, improvements, and the like made within the spirit and principles of the present application should be included in the protection scope of the present application.

## Claims

1. A stator assembly applied to an axial flux motor, **characterized in that**: the stator assembly comprises two iron cores, air gap sides of the two iron cores are disposed opposite to each other or back to back, the air gap side of the iron core is provided with a plurality of winding slots disposed around a central axis of the stator assembly, a projection of the iron core along an axial direction of the stator assembly is a first projection, and in the first projection, a length direction of the winding slot is relatively inclined with respect to a radial direction of the iron core.

2. The stator assembly according to claim 1, **characterized in that**: a projection of the stator assembly along the axial direction of the stator assembly is a second projection, and in the second projection, the plurality of winding slots of one iron core intersect with the plurality of winding slots of the other iron core in a one-to-one correspondence.

3. The stator assembly according to claim 1 or 2, **characterized in that**: the number of the winding slots of the iron core is N, one end of the winding slot penetrates an inner peripheral wall of the iron core to form a first open end, the other end of the winding slot penetrates an outer peripheral wall of the iron core to form a second open end, in the first projection, a circle center of the iron core is connected with a midpoint of the first open end to form a first radial line, the circle center of the iron core is connected with a midpoint of the second open end to form a second radial line, and an angle of an included angle formed by the first radial line and the second radial line is θ, wherein 180°/N ≤ θ ≤ 360°/N.

4. The stator assembly according to claim 3, **characterized in that**: in the first projection, each angle θ is the same, and the two iron cores have the same angle θ.

5. The stator assembly according to any one of claims 1 to 4, **characterized in that**: the stator assembly further comprises an injection molded part, the iron core comprises a plurality of tooth portions, the plurality of tooth portions are spaced apart along a circumferential direction of the stator assembly to form a plurality of winding slots, and the plurality of tooth portions are connected by the injection molded part.

6. The stator assembly according to claim 5, **characterized in that**: the plurality of tooth portions of the two iron cores are connected into one body by the injection molded part.

7. The stator assembly according to claim 6, **characterized in that**: when the air gap sides of the two iron cores are disposed back to back, the tooth portions of the two iron cores are attached along the axial direction of the stator assembly.

8. The stator assembly according to any one of claims 1 to 4, **characterized in that**: the iron core comprises a yoke portion and a plurality of tooth portions provided on the yoke portion, the plurality of tooth portions are spaced apart along a circumferential direction of the stator assembly to form a plurality of winding slots, and when the air gap sides of the two iron cores are disposed back to back, the yoke portions of the two iron cores form an integral member.

9. The stator assembly according to any one of claims 1 to 8, **characterized in that**: the stator assembly further comprises two sets of windings, the windings comprise winding wires wound in the winding slots, and the winding wires are flat wires.

10. The stator assembly according to any one of claims 1 to 8, **characterized in that**: the stator assembly further comprises two sets of windings, the windings are wound in the winding slots, and the windings are distributed windings.

11. The stator assembly according to any one of claims 1 to 10, **characterized in that**: the air gap side of the iron core is provided with a plurality of wire inlet ports, the plurality of wire inlet ports are in communication with the plurality of winding slots in a one-to-one correspondence, and a width of the wire inlet port is less than a width of the winding slot.

12. The stator assembly according to any one of claims 1 to 11, **characterized in that**: the stator assembly further comprises a stator housing for accommodating a cooling medium, and the iron core is accommodated in the stator housing.

13. An axial flux motor, **characterized in that**: the axial flux motor comprises the stator assembly according to any one of claims 1 to 12.

14. The axial flux motor according to claim 13, **characterized in that**: the axial flux motor further comprises a rotor, and when the air gap sides of the two iron cores are disposed opposite to each other, the rotor is disposed between the two iron cores and coaxially with the two iron cores.

15. The axial flux motor according to claim 13, **characterized in that**: the axial flux motor further comprises two rotors, and when the air gap sides of the two iron cores are disposed back to back, one rotor is disposed opposite to the air gap side of one iron core, and the other rotor is disposed opposite to the air gap side of the other iron core.

16. An electric drive apparatus, **characterized in that**: the electric drive apparatus comprises the axial flux motor according to any one of claims 13 to 15.

17. An electric drive system, **characterized in that**: the electric drive system comprises a battery and the electric drive apparatus according to claim 16, and the battery is electrically connected to the electric drive apparatus.

18. An electric device, **characterized in that**: the electric device comprises the electric drive system according to claim 17.
